# EUROPÄISCHE PATENTSCHRIFT

(11) **EP 3 420 218 B1**
(45) Veröffentlichungstag und Bekanntmachung des Hinweises auf die Patenterteilung: **08.10.2025**
(21) Anmeldenummer: 17704442.7
(22) Anmeldetag: 08.02.2017
(51) Int. Cl.: F02N 11/08, F02N 11/10, F02N 11/04

(54) **WIEDERSTARTVERFAHREN UND WIEDERSTARTANORDNUNG ZUM STARTEN EINES VERBRENNUNGSMOTORS EINES KRAFTFAHRZEUGS**
METHOD AND SYSTEM FOR RESTARTING A COMBUSTION ENGINE OF A VEHICLE
PROCÉDÉ ET SYSTÈME DE REDÉMARRAGE D'UN MOTEUR À COMBUSTION D'UN VÉHICULE

(30) Priorität: 23.02.2016 DE 102016202756
(43) Veröffentlichungstag der Anmeldung: 02.01.2019
(73) Patentinhaber: Volkswagen Aktiengesellschaft, 38440 Wolfsburg (DE)
(72) Erfinder: FRÖHLICH, Björn, 38518 Gifhorn (DE); DALCHOW, Jan-Lars, 38104 Braunschweig (DE)
(86) Internationale Anmeldenummer: PCT/EP2017/052686
(87) Internationale Veröffentlichungsnummer: WO 2017/144271

(56) Entgegenhaltungen:
- EP-A1- 2 808 520
- WO-A1-2015/075526
- WO-A1-2015/079296
- DE-A1- 102013 216 622
- JP-A- 2010 174 711
- US-A1- 2005 131 622

## Beschreibung

Die Erfindung betrifft ein Wiederstartverfahren und eine Wiederstartanordnung zum Starten eines Verbrennungsmotors eines Kraftfahrzeugs.

Solche Verfahren und Anordnungen sind im Rahmen einer Start-Stopp-Funktionalität inzwischen weit verbreitet. Start-Stopp-Funktionalitäten erlauben es, in Anhaltephasen den Verbrennungsmotor zeitweise abzuschalten, ohne dass der Fahrer dazu den Fahrtschalter manuell betätigt. Am Ende so einer Stillstandsphase wird der abgestellte Verbrennungsmotor wieder automatisch gestartet (Wiederstarten), sobald der Fahrer weiterfahren will. Auch das Wiederstarten erfolgt ohne manuelle Betätigung des Fahrtschalters.

Zum Wiederstarten gibt es mehrere bereits realisierte Verfahren und entsprechende Vorrichtungen. Bei einem Verfahren gemäß der EP 1 063 424 B1 wird der Wiederstartvorgang anhand der Stellung des Bremspedals eingeleitet, dessen Stellung über geeignete Sensoren erfasst wird. Beim Loslassen des Bremspedals aus seiner betätigten Stellung (Bremsstellung) wird der Verbrennungsmotor des Kraftfahrzeugs dann gestartet, wenn das Bremspedal in seine Ausgangsstellung zurückgelangt. Der Startvorgang wird dabei über die Erfassung einer bestimmten Durchgangsstellung des Bremspedals ausgelöst, wenn dieses in seine Ausgangsstellung zurückkehrt.

Ein druckgesteuertes Verfahren ist aus der EP 1 541 864 B1 bekannt. Hier wird der zeitliche Verlauf des Bremsdruckes beim Lösen des Bremspedals ausgewertet und anhand eines negativen Bremsdruckgradienten wird dann der Wiederstartvorgang ausgelöst. Dabei muss der Bremsdruckgradient einen Schwellwert überschreiten, damit die Steuerungselektronik in einem Steuergerät den Wiederstartvorgang im Rahmen einer Start-Stopp-Funktionalität auslöst. Bei dieser Lösung kann es vorkommen, dass bei einem sehr langsamen Lösen der Bremse der Schwellwert nicht erreicht werden kann, so dass zum Einleiten des Wiederstartens zusätzliche Maßnahmen erforderlich sind.

Weitere Verfahren sind aus WO2015/079296A1, EP2808520A1 und DE102013216622A1 bekannt.

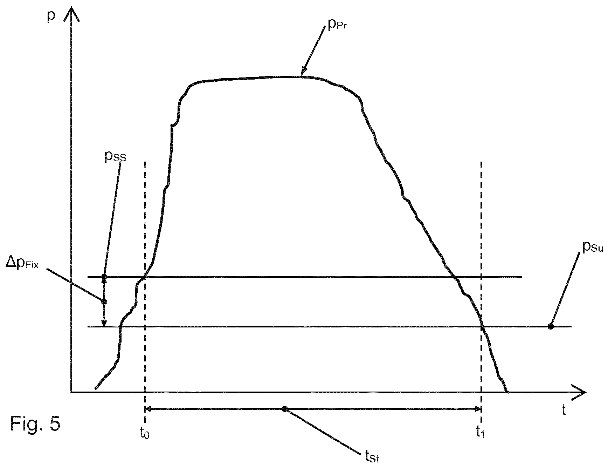

Beispielsweise kann ein zusätzlicher unterer Schwellwert p_{SU} des Bremsdrucks berücksichtigt werden, bei dem dann der Wiederstartvorgang eingeleitet wird. Dieser Zusammenhang wird aus **der** **Figur** 5 erkennbar, in dem ein Bremskraftprofil p_{Pr} (Bremskraft p über Zeit t) dargestellt ist. Die Stopp-Phase beginnt beim Überschreiten eines Stoppschwellwertes p_{SS} und endet beim Unterschreiten des erwähnten unteren Schwellwertes p_{SU}, bei dem der Wiederstart ausgelöst wird. Dabei liegt der Wert p_{SU} um eine feste Druckdifferenz Δp_{Fix} unter dem Wert p_{SS}.

Gerade in Verbindung mit dem Gradientenverfahren, bei dem wegen eines zu geringen Bremsabfallgradienten der Wiederstartvorgang nicht ausgelöst wird, sondern erst beim Unterschreiten des unteren Druckschwellwertes p_{SU}, kann so ein Wiederstart als verzögert empfunden werden.

Es besteht also die Aufgabe, ein Wiederstartverfahren bzw. eine Wiederstartvorrichtung zur Verfügung zu stellen, bei dem eine sensible Start-Stopp-Funktionalität gewährleistet ist.

Diese Aufgabe wird durch das erfindungsgemäße Verfahren nach Anspruch 1 und durch die Wiederstartanordnung gemäß Anspruch 10 gelöst.

Weitere vorteilhafte Ausgestaltungen der Erfindung ergeben sich aus den Unteransprüchen und der nachfolgenden Beschreibung bevorzugter Ausführungsbeispiele der vorliegenden Erfindung.

Das erfindungsgemäße Wiederstartverfahren zum selbstständigen Start eines Verbrennungsmotors eines Kraftfahrzeugs mittels einer Bremspedalbetätigung zeichnet sich durch Folgendes aus:
Zunächst wird der Bremsdruck mittels eines Bremsdrucksensors erfasst und die entsprechende Bremsdrucksignalfolge an ein Steuergerät, z.B. eine Motorsteuerung (ECU) ausgegeben. Auf der Grundlage dieser Bremsdrucksignalfolge wird ein Bremsdruckprofil bestimmt, aus dem wiederum ein Referenzdruckwert ermittelt wird. Dieser Referenzdruckwert dient als (variabler) Ausgangswert für die Erfassung eines Bremse-Lösen-Zustands. Das bedeutet, dass nicht anhand fester, voreingestellter Bremsdruckschwellwerte (s.o.) die Stopp-Phase im Rahmen einer Start-Stopp-Funktionalität beendet wird, sondern ausgehend von dem ermittelten Referenzdruckwert.

Der Bremse-Lösen-Zustand wird dann erfasst, wenn beim Lösen eines Bremspedals ausgehend vom ermittelten Referenzdruckwert (variabel) ein Bremsdruckabfall erfasst wird, der einen Druckabfallgrenzwert überschreitet, also eine bestimmte (aber ggf. variable) Abweichung vom Referenzdruckwert. Das Startsignal an einen Starter zum Starten eines Verbrennungsmotors wird dann abgegeben, wenn dieser Bremse-Lösen-Zustand erfasst wurde.

Mit dem oben dargestellten erfindungsgemäßen Verfahren ist es damit möglich, vom individuellen Bremsverhalten ausgehend - durch Ermittlung eines individuellen Referenzdruckwertes aus einem tatsächlichen Bremsdruckprofil - eine sensible und gegebenenfalls auch fahrerindividuelle Wiederstartbedingung abzuleiten, die auf der Grundlage eines variablen Bremse-Lösen-Zustands ermittelt wird, und damit das Wiederanfahrverhalten für den Fahrer spürbar verbessert wird, indem es sich, gegebenenfalls auch fahrerindividuell, immer "gleich" anfühlt. Das Wiederstartverhalten ist auf diese Weise optimiert.

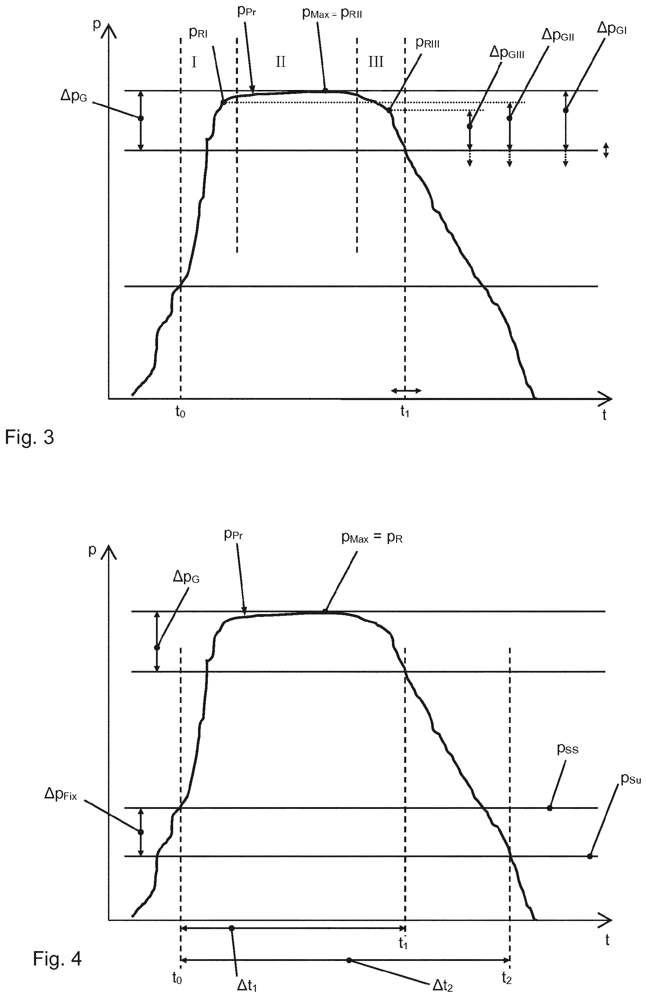

Es gibt Ausführungen bei denen der Referenzdruckwert in Abhängigkeit von einem Profilabschnitt des ermittelten Bremsdruckprofils bestimmbar ist. Typsicherweise verläuft ein Bremsdruckprofil während einer Start-Stopp-Phase - bei der es sich eigentlich um eine Stopp-Start-Phase handelt - hutförmig (vgl. Fig. 3 - 5). D.h. zunächst gibt es einen relativ steilen Anstieg des Bremsdruckes, der während der Stopp-Phase weitgehend konstant auf einem Plateau gehalten wird, und dann kurz vor dem Wiederstarten wieder abfällt, bis der Bremsdruck vollständig abgebaut ist. Um das Wiederstartverhalten zu beeinflussen, können nun unterschiedliche Abschnitte dieses Profils ausgewertet werden, um einen Referenzdruckwert zu bestimmen.

Es ist bspw. möglich den Anstiegsabschnitt auszuwerten und bspw. den Referenzdruckwert in der Übergangsphase aus dem Anstieg in die Plateauphase zu ermitteln.

Eine andere Möglichkeit besteht darin, dass Profil des Plateauabschnitts auszuwerten, in der die maximalen Bremsdrücke gehalten werden, indem aus diesen Signalen ein Durchschnittswert gebildet wird.

Eine andere Möglichkeit besteht darin, bspw. den Übergang aus dem Plateauabschnitt in den Abfallabschnitt zu erfassen und hier einen Referenzdruckwert festzulegen.

Eine weitere Variation kann auch darin bestehen, den Durchschnittswert der Übergangswerte aus dem Anstiegsabschnitt in den Plateauabschnitt und aus dem Plateauabschnitt in den Abfallabschnitt zu bilden und so den Referenzdruckwert zu ermitteln.

In einer Gruppe von Ausführungsformen des Verfahrens ist vorgesehen, dass der Referenzdruckwert in Abhängigkeit von mehreren Start-Stopp-Zyklen innerhalb eines Betriebszyklus (z.B. der Fahrt eines bestimmten Fahrers) ermittelt wird. So ist es möglich, einen fahrerindividuellen, bevorzugten Referenzdruckwert zu ermitteln und als Ausgangswert für das Bestimmen des Bremse-Lösen-Zustands festzulegen.

Ein besonders einfaches Verfahren zur Bestimmung des Referenzdruckwertes besteht darin, das Bremsdruckmaximum eines ermittelten Bremsdruckprofils zu bestimmen und von diesem ausgehend den Bremse-Lösen-Zustand zu erfassen.

Daneben gibt es auch Ausführungsformen, bei denen der Druckabfallgrenzwert variabel und individuell bestimmbar ist.

Es gibt bspw. Verfahren, bei denen der Druckabfallgrenzwert in Abhängigkeit vom ermittelten Referenzdruckwert bestimmbar ist. Er kann bspw. als prozentuale Abweichung vom Referenzdruckwert ausgehend bestimmt werden. Damit wird bspw. bei sehr hohen, maximalen Bremsdrücken in gleicher Weise der Druckabfallgrenzwert erhöht oder verringert, um den Bremse-Lösen-Zustand zu erfassen.

In anderen Verfahren kann der Druckabfallgrenzwert auch linear, degressiv oder progressiv mit dem Referenzdruckwert erhöht oder auch verringert werden.

Der Druckabfallgrenzwert kann in anderen Verfahren auch in Abhängigkeit von der einstellbaren Schaltcharakteristik eines Automatikgetriebes bestimmbar sein. So ist er bspw. bei einer emissionsoptimierten Schalt- und Fahrcharakteristik zu erhöhen, um einen späteren Wiederstart und eine Ausdehnung der Stopp-Phase zu ermöglichen, während er bei einer sportlichen Schalt- und Fahrcharakteristik eher verkürzt wird, um die Stopp-Phasen so kurz wie möglich zu halten.

Es gibt auch Verfahren, bei denen der Druckabfallgrenzwert in Abhängigkeit von einer Fahrertypklassifizierung bestimmbar ist. Solche Fahrertypklassifizierungen sind in Kraftfahrzeugen z.B. bei adaptiven Automatikgetrieben realisiert.

Um das Bremse-Lösen-Verhalten weiter zu individualisieren, bzw. das Wiederstartverhalten zu verbessern, können auch zusätzliche Wiederstartbedingungen zur Abgabe des Wiederstarts eingeführt werden.

Bspw. kann die Bedingung ergänzt werden, dass ein unterer Schwellwert unterschritten wird, um die Wiederstartfunktion auszulösen. Dies ist bspw. dann sinnvoll, wenn aus irgendeinem Grund die Bestimmung des Referenzdruckwertes bzw. die des Druckabfallgrenzwertes nicht möglich sein sollte oder fehlschlägt.

Weiterhin besteht auch die Möglichkeit beim Lösen der Bremse einen Hauptbremsschalter zu betätigen, der bspw. in Verbindung mit einem Schaltgetriebe oder auch mit dem Wahlhebel eines Automatikgetriebes kombinierbar ist. Der Stopp-Zustand wird z.B. beendet bzw. der Wiederstart wird ausgelöst, wenn der Schalthebel aus der Park- in eine Fahrstellung gebracht wird und dadurch ein Startvorgang ausgelöst wird.

Es gibt auch Ausführungen bei denen die Ausgabe der Bremsdrucksignalfolge zu- oder abschaltbar ist und der Wiederstartvorgang bspw. nur aufgrund einer Bremspedalstellung bzw. beim Unterschreiten eines unteren Druckschwellwertes ausgelöst wird.

Es gibt weiter Situationen, in denen das Wiederstartverfahren aus Sicherheitsgründen oder anderen Funktionsgründen unterbunden werden sein soll. Dazu gehört bspw. ein Zustand, bei dem eine Fahrzeugtür, eine Gepäckraumklappe und/oder eine Motorhaube geöffnet ist.

Eine andere Situation kann bspw. dann eintreten, wenn über einen Sensor oder einen Detektor eine Unfallsituation erfasst wird. Dazu gehören bspw. stark erhöhte Beschleunigungswerte, das Auslösen eines Airbags oder auch eine ungewöhnliche Lageveränderung des Fahrzeugs aus der Normallage (Schleudern, Überschlagen o.ä.).

Zum Schutz einer Stromquelle (Tiefentladung eines Akkus) kann auch eine untere Spannungsgrenze im Bordnetz festgelegt werden, bei deren Unterschreiten ein Wiederstartvorgang nicht ausgeführt wird.

Ähnliches gilt bspw. auch, wenn gleichzeitig eine Feststellbremse angezogen ist und daher eine bremsdruckabhängige Wiederstartanforderung unterbleiben soll.

Ein weiterer Aspekt der Erfindung betrifft eine Wiederstartanordnung für ein Kraftfahrzeug mit einem hydraulischen Bremssystem, einem Bremsdrucksensor einem Starter und einem Steuergerät, wobei das Steuergerät mit dem Starter und dem Bremsdrucksensor in Kommunikationsverbindung steht und das Steuergerät einen Wiederstartalgorithmus als ablauffähiges Programm enthält, mit dem das erfindungsgemäße Wiederstartverfahren ausführbar ist. Über so eine Konfiguration ist es besonders einfach, das erfindungsgemäße Verfahren in einem Fahrzeug durch eine reine Programmierungsmaßnahme zu implementieren, gegebenenfalls auch nachträglich durch eine Softwareaktualisierung.

Dabei ist sinnvollerweise vorgesehen, das gesamte Wiederstartverfahren wahlweise zu- oder abschaltbar zu gestalten. In einer besonderen Ausführungsform ist dabei der Schalter bspw. über einen Gangwählhebel betätigbar oder als getrennter Schalter an diesem gut zugänglich angeordnet.

Ein Fahrzeug mit einer solchen Wiederstartanordnung kann hinsichtlich seines Start-Stopp-Verhaltens entweder fahrerindividuell angepasst werden oder auch hinsichtlich anderer Randbedingungen (Umweltschutz/Emission/Verbrauch, Verschleiß, etc.) angepasst werden.

Ausführungsbeispiele der Erfindung werden nun beispielhaft und unter Bezugnahme auf die beigefügte Zeichnung beschrieben. Darin zeigt:
- Fig. 1: eine schematische Übersichtsdarstellung einer Fahrzeugkonfiguration, mit der das erfindungsgemäße Wiederstartverfahren ausführbar ist bzw. die eine erfindungsgemäße Wiederstartanordnung umfasst.
- Fig. 2: ein Funktionsschema, welches die wesentlichen Bestandteile eines Ausführungsbeispiels eines erfindungsgemäßen Verfahrens zeigt.
- Fig. 3: ein Bremsdruckzeitdiagramm, in dem Aspekte eines erfindungsgemäßen Verfahrens deutlich werden; und
- Fig. 4: ein Bremsdruckzeitdiagramm, an dem der Unterschied zu einem Verfahren nach dem Stand der Technik erläutert wird; sowie
- Fig. 5: ein Bremsdruckzeitdiagramm, das ein bekanntes Wiederstartverfahren / Start-Stopp-Verfahren darstellt.

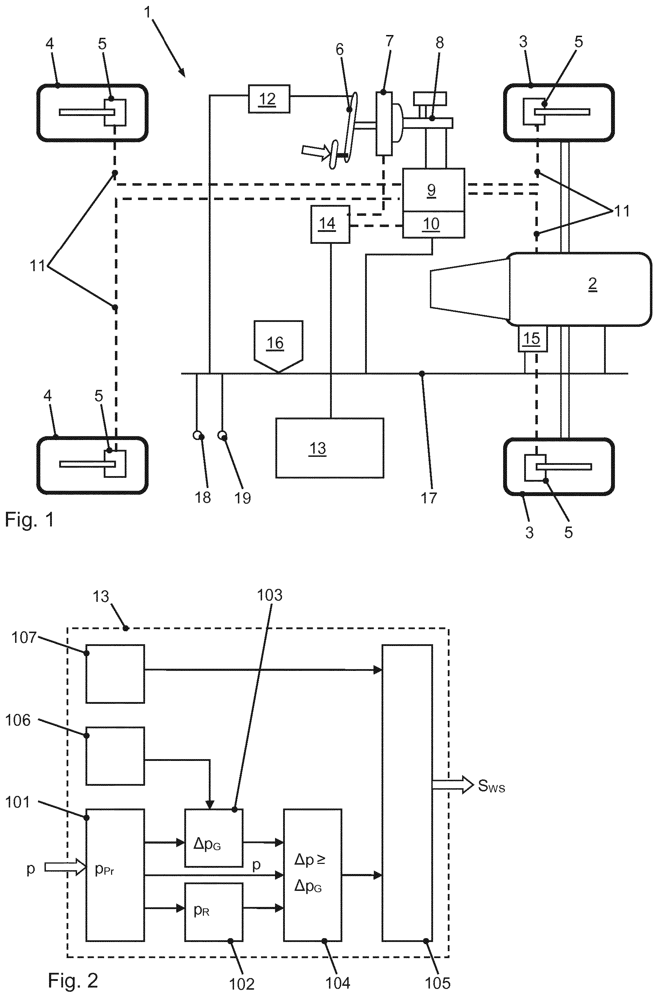

Die Grundfunktion des erfindungsgemäßen Wiederstartverfahrens und der dazu erforderlichen Bauteile wird zunächst anhand der Fig. 1 erklärt.

Die Übersichtsdarstellung in Fig. 1 zeigt schematisch ein Kraftfahrzeug 1 mit einem Verbrennungsmotor 2, der die Räder 3 antreibt. Die Räder 4 sind hier nicht angetrieben dargestellt, können aber in anderen Ausführungsformen ebenfalls angetrieben sein. Alle Räder 3, 4 verfügen über hydraulisch betätigbare Bremsen 5, die Bestandteil eines Hydraulikbremssystems sind, bei dem über das Bremspedal 6, einen Bremsdruckverstärker 7, einen Hauptbremszylinder 8, ein Hydraulikaggregat 9 mit einer Hydraulikpumpe 10 und Bremsleitungen 11 die Bremsen 5 betätigt werden.

Die Betätigung des Bremspedals 6 wird bspw. über einen Schalter 12 erfasst, der über eine Signalleitung 17 mit einem Steuergerät 13 verbunden ist. Der aufgebaute Bremsdruck in den Bremsleitungen 11 und/oder im Bremsdruckverstärker 7 wird über einen Bremsdrucksensor 14 erfasst, der entsprechende Bremsdruckdaten ebenfalls über eine Signalleitung 17 an das Steuergerät 13 liefert.

Der Verbrennungsmotor 2 wird über einen elektrischen Starter 15 bei Bedarf gestartet, der ebenfalls über eine Signalleitung 17 mit dem Steuergerät 13 verbunden ist und von dort gegebenenfalls ein Startsignal empfängt. Der elektrische Starter kann bspw. als Starter-Generator ausgeführt sein, der auf der Kurbelwelle integriert ist (ISG) oder über einen Riementrieb (RSG) mit dem Motor gekoppelt ist. Er kann auch eine elektrische Antriebsmaschine bei einem Hybridantriebskonzept sein.

Weiterhin kann ein Bussystem 16 (z.B. ein CAN-Bussystem) vorgesehen sein, über das die Kommunikation und Signalübertragung zwischen verschiedenen elektrischen und elektronischen Einheiten im Kraftfahrzeug 1 realisiert wird. Dazu gehören bspw. auch der Verbrennungsmotor selbst, der Schalter 12, der Bremsdrucksensor 14, der elektrische Starter 15 und die Hydraulikpumpe 10. Weitere Sensoren 18 und Funktionsschalter 19 sind ebenfalls über die Signalleitungen 17 mit dem Steuergerät 13 verbunden und können dort die nachfolgend dargestellten Wiederstartfunktionen steuern.

Signalleitungen 17 sind in Fig. 1 als durchgezogene Linien dargestellt und Hydraulik- bzw. Druckleitungen 11 als gestrichelte Linien.

Eine Start-Stopp-Funktionalität wird bei dem oben dargestellten System folgendermaßen realisiert. Mittels des Bremsdrucksensors 14 wird ein Bremsdruck p erfasst, der entsprechende Bremsdrucksignale an das Steuergerät 13 abgibt. In einer Alternative, die nicht zur Erfindung gehört, oder ergänzend kann eine

Betätigung des Bremspedals auch über den Schalter 12 an das Steuergerät 13 signalisiert werden.

Nach Aufbau eines bestimmten Bremsdrucks signalisiert das Steuergerät 13 ein Stoppsignal an den Motor.

Bei Eintritt einer Wiederstartbedingung gibt das Steuergerät 13 ein Wiederstartsignal S_{WS} an den elektrischen Starter 15 ab, der dann den Verbrennungsmotor 2 wieder startet.

Anhand von Fig. 2 wird nun der Ablauf des erfindungsgemäßen Verfahrens erläutert. Im Steuergerät 13 ist dazu ein Wiederstartalgorithmus mit mehreren Funktionsblöcken abrufbar, der im Steuergerät (13) als ablauffähiges Programm verfügbar ist, mit dem das Wiederstartverfahren durchgeführt werden kann.

Die Bremsdrucksignale vom Bremsdrucksensor 14, die den Bremsdruck p abbilden, laufen in einen ersten Funktionsblock 101, in dem sie zu einem Bremskraftprofil p_{Pr} weiterverarbeitet werden (s. dazu auch Fig. 3 - Fig. 5).

In einem zweiten Funktionsblock 102 wird aus diesem Bremskraftprofil p_{Pr} ein Referenzdruckwert p_{R} ermittelt. In einem dritten Funktionsblock 103 wird ein Druckabfallgrenzwert Δp_{G} ermittelt. Und in einem vierten Funktionsblock 104 wird ein Bremse-Lösen-Zustand erfasst, wenn beim Lösen des Bremspedals ausgehend von dem ermittelten Referenzdruckwert p_{R} ein Bremsdruckabfall Δp erfasst wird, der den Druckabfallgrenzwert Δp_{G} unterschreitet. Dieser Fall tritt dann ein, wenn der vom Bremsdrucksensor 14 erfasste (absolute) Bremsdruck p die Differenz aus dem Referenzdruckwert p_{R} und dem Druckabfallgrenzwert Δp_{G} unterschreitet. Daraufhin wird in einem fünften Funktionsblock 105 das Wiederstartsignal S_{WS} an den Starter 15 abgegeben und der Verbrennungsmotor 2 wird wieder angelassen.

Die Bestimmung des Referenzdruckwertes p_{R} und des Druckabfallgrenzwertes Δp_{G} wird nun anhand der Fig. 3 erläutert. Dazu sind unterschiedliche Ansätze möglich, die jedoch nach dem gleichen Grundprinzip erfolgen.

In einem ersten Ausführungsbeispiel wird anhand des Bremsdruckprofils p_{Pr} der maximale Bremsdruck p_{Max} ermittelt und als Referenzdruckwert p_{R} festgelegt. Als Wiederstartbedingung wird dann festgelegt, dass der Druckabfall von dem maximalen Bremsdruck p_{Max} ausgehend ein bestimmtes Δp betragen muss, damit das Wiederstartsignal S_{WS} abgegeben wird und die Stopp-Phase t_{St} zwischen t₀ und t₁ beendet wird (schraffierte Fläche im Diagramm). Damit ist sichergestellt, dass unabhängig vom tatsächlich erreichten maximalen Bremsdruck p_{Max} immer bei gleichem Bremsdruckabfall Δp das Wiederstartsignal generiert wird. Damit ist eine sensible, rasche und als konsistent empfundene Wiederstartbedingung realisierbar.

In alternativen Ausführungsbeispielen kann der Referenzdruckwert p_{R} auch auf andere Weise festgelegt werden, bspw. durch Analysen unterschiedlicher Phasen/Abschnitte des Bremsdruckprofils. Fig. 3 zeigt dazu einen Profilabschnitt I, in dem der Übergang aus einer Anstiegsphase in eine Plateauphase detektiert wird. Dieser Wert p_{RI} kann dann als Referenzdruckwert p_{R} festgelegt werden.

In einem anderen Ausführungsbeispiel wird eine Abstiegsphase (Abschnitt III in Fig. 3) betrachtet, in dem der Übergang aus der Plateauphase in die Abstiegsphase als p_{RIII} ermittelt wird und dieser Wert als Referenzdruckwert p_{R} festgelegt wird.

Es ist auch möglich nur die Plateauphase auszuwerten (Abschnitt II) und dort bspw. einen durchschnittlichen Maximalwert als p_{RII} zu berechnen, der dann als Referenzdruckwert p_{R} dienen soll.

In ähnlicher Weise gibt es Ausführungsbeispiele, in denen der Druckabfallgrenzwert Δp_{G} auch variabel in Abhängigkeit vom Bremsdruckprofil p_{Pr} oder auf andere Weise ermittelt wird.

Es besteht auch die Möglichkeit, den Referenzdruckwert p_{R} und den Druckabfallgrenzwert Δp_{G} aus mehreren ermittelten Bremskraftprofilen p_{Pr} zu bestimmen, die z.B. während einer Fahrt eines bestimmten Fahrers bestimmt wurden.

So kann er bspw. in einem prozentualen Zusammenhang mit dem Referenzdruckwert p_{R} stehen. Es kann aber auch vorgesehen werden, dass der Druckabfallgrenzwert Δp_{G} progressiv, degressiv oder auch linear mit dem Referenzdruckwert p_{R} und insbesondere mit einem entsprechenden maximalen Bremsdruck p_{Max} variiert. In der Fig. 3 ist dies durch die Bezeichnungen Δp_{GI} bis Δp_{GIII} angedeutet.

Weitere Bedingungen können über die in der Fig. 2 dargestellten sechsten und siebten Funktionsblöcke 106, 107 realisiert werden. Bspw. kann der Funktionsblock 106 über eine sog. Fahrertypklassifizierung die Bestimmung des Druckabfallgrenzwertes Δp_{G} bestimmen, oder auch alternativ über die Schaltcharakteristik eines Automatikgetriebes. Dadurch wird bspw. die Neigung berücksichtigt, mehr oder weniger "sportlich" zu fahren. Man kann dabei davon ausgehen, dass bspw. bei einer sportlichen Schaltcharakteristik oder einer sportlichen Fahrertypklassifizierung der Druckabfallgrenzwert Δp_{G} herabgesetzt wird, so dass ein früherer Wiederstart des Verbrennungsmotors 2 erfolgt.

Über den siebten Funktionsblock 107 können auch noch weitere Bedingungen für die Abgabe des Wiederstartsignals S_{WS} beachtet werden, diese können als UND- und/oder als ODER-Bedingungen zu berücksichtigen sein. Bspw. kann dies die zusätzliche Beachtung eines Unterschreitens eines unteren Bremsdruckschwellwertes p_{SU} sein, bei dem ein Wiederstartsignal abgegeben werden soll.

Oder das Wiederstartsignal S_{WS} wird über einen oder mehrere Schalter 18 oder Sensoren 19 ausgelöst bzw. blockiert. Dies kann realisiert werden, indem bestimmte Stellungen von Fahrzeugbestandteilen wie Fahrzeugtüren, Gepäckraumklappen und der Motorhaube erfasst werden, Unfallsituationen erkannt werden, eine untere Spannungsgrenze im Bordnetz unterschritten ist, oder signalisiert wird, dass bspw. eine Feststellbremse angezogen ist, und in solchen Fällen die Abgabe eines Wiederstartsignals S_{WS} über die Betätigung des Bremspedals 6 unterbunden wird.

Den Unterschied zu einer herkömmlichen Wiederstartanforderung, wie sie anhand der Fig. 5 in der Einleitung beschrieben ist, zeigt die Fig. 4. Ausgehend vom über das Bremsprofil p_{Pr} erfassten maximalen Bremswertes p_{Max}, der als Referenzdruckwert p_{R} festgelegt wird, und einem festgelegten oder anders ermittelten Druckabfallgrenzwertes Δρ_{G} wird die Stopp-Phase gemäß der vorliegenden Erfindung nach einem Zeitraum Δt₁ beendet. Δt, ist der Zeitraum zwischen den Zeitpunkten t₀ und t₁.

Nach dem herkömmlichen Verfahren endet die Stopp-Phase erst nach einem deutlich längeren Zeitraum Δt₂, der zwischen den Zeitpunkten t₀ und t₂ liegt. Es ist also ein schnellerer und damit auch sensiblerer Wiederstart oder auch früherer Wiederstart möglich. Der Fahrer empfindet beim erfindungsgemäßen Verfahren eine unmittelbarere Reaktion (besseres Responseverhalten) auf das Lösen der Bremse. Dieses Responseverhalten kann durch die Bestimmung des Referenzdruckwerts p_{R} und des Druckabfallgrenzwertes Δp_{G} weiter optimiert oder individualisiert werden.

### Bezugszeichenliste

- 1: Kraftfahrzeug
- 2: Verbrennungsmotor
- 3: Räder
- 4: Räder
- 5: Bremsen
- 6: Bremspedal
- 7: Bremsdruckverstärker
- 8: Hauptbremszylinder
- 9: Hydraulikaggregat
- 10: Hydraulikpumpe
- 11: Bremsleitung
- 12: Schalter
- 13: Steuergerät
- 14: Bremsdrucksensor
- 15: elektrischer Starter
- 16: Bussystem
- 17: Signalleitung
- 18: Schalter
- 19: Sensor
- p: Bremsdruck
- t: Zeit
- p_{SU}: unterer Schwellwert
- p_{SS}: Stoppschwellwert
- Δp_{Fix}: feste Druckdifferenz
- p_{Pr}: Bremskraftprofil
- p_{R}: Referenzdruckwert
- p_{Max}: maximale Bremskraft
- Δp: Bremsdruckabfall
- Δp_{G}: Druckabfallgrenzwert
- t_{St}: Motorstoppzeit
- t₀, t₁, t₂: Zeitpunkte
- S_{WS}: Wiederstartsignal
- I - III: Bremskraftprofilabschnitte
- 101: erster Funktionsblock
- 102: zweiter Funktionsblock
- 103: dritter Funktionsblock
- 104: vierter Funktionsblock
- 105: fünfter Funktionsblock
- 106: sechster Funktionsblock
- 107: siebter Funktionsblock

## Patentansprüche

1. Wiederstartverfahren zum selbsttätigen Start eines Verbrennungsmotors (2) eines Kraftfahrzeugs (3) mittels einer Bremspedalbetätigung umfassend die folgenden Schritten:
Erfassen eines Bremsdrucks (p) mittels eines Bremsdrucksensors (14),
Ausgeben einer entsprechenden Bremsdrucksignalfolge an ein Steuergerät (13),
Bestimmen eines Bremsdruckprofils (p_{Pr}) aus der Bremsdrucksignalfolge, **dadurch gekennzeichnet,**
**dass** das Verfahren zusätzlich die folgenden Schritten umfasst:
Ermitteln eines Referenzdruckwertes (p_{R}) aus dem Bremsdruckprofil, wobei der Referenzdruckwert (p_{R}) ein Bremsdruckmaximum (p_{Max}) eines ermittelten Bremsdruckprofils (p_{Pr}) ist,
Erfassen eines Bremse-Lösen-Zustands, wenn beim Lösen eines Bremspedals ausgehend vom ermittelten Referenzdruckwert (p_{R}) ein Bremsdruckabfall (Δp) erfasst wird, der einen Druckabfallgrenzwert (Δp_{G}) überschreitet, und
Abgeben eines Startsignals (S_{WS}) an einen Starter (15) zum Starten des Verbrennungsmotors (2), wenn der Bremse-Lösen-Zustand erfasst wurde.

2. Wiederstartverfahren nach Anspruch 1, wobei der Referenzdruckwert (p_{R}) in Abhängigkeit von einem Profilabschnitt (I; II; III) des ermittelten Bremsdruckprofils (p_{Pr}) bestimmbar ist.

3. Wiederstartverfahren nach Anspruch 1 oder 2, wobei der Referenzdruckwert (p_{R}) in Abhängigkeit von mehreren Anhaltezyklen innerhalb eines Betriebszyklus durch Auswertung mehrerer Bremsdruckprofile (p_{Pr}) bestimmbar ist.

4. Wiederstartverfahren nach einem der Ansprüche 1 bis 3, wobei der Druckabfallgrenzwert (Δp_{G}) in Abhängigkeit vom ermittelten Referenzdruckwert (p_{R}) und/oder vom ermittelten Bremsdruckprofil (p_{Pr}) bestimmbar ist.

5. Wiederstartverfahren nach einem der Ansprüche 1 bis 4, wobei der Druckabfallgrenzwert (Δp_{G}) in Abhängigkeit von einer einstellbaren Schaltcharakteristik eines Automatikgetriebes bestimmbar ist.

6. Wiederstartverfahren nach einem der Ansprüche 1 bis 5, wobei der Druckabfallgrenzwert (Δp_{G}) in Abhängigkeit von einer Fahrertypklassifizierung des jeweiligen Fahrers bestimmbar ist.

7. Wiederstartverfahren nach einem der vorhergehenden Ansprüche, wobei das Startsignal (S_{WS}) abgegeben wird wenn wenigstens eine der folgenden Bedingungen erfüllt ist:
der Bremse-Lösen-Zustand erfasst wurde,
der Bremsdruck einen unteren Schwellwert (p_{SU}) unterschreitet,
beim Lösen der Bremse ein Hauptbremschalter (8) betätigt wird.

8. Wiederstartverfahren nach einem der vorhergehenden Ansprüche, wobei das Ausgeben der Bremsdrucksignalfolge wahlweise zu- oder abschaltbar ist.

9. Wiederstartverfahren nach einem der vorhergehenden Ansprüche, wobei die Abgabe des Startsignals (S_{WS}) unterbunden wird, wenn wenigstens einer der folgenden Zustände mittels eines Schalters (18) und/oder eines Sensors (19) erfasst wird:
eine Fahrzeugtür, eine Gepäckraumklappe und/oder eine Motorhaube ist geöffnet,
eine Unfallsituation besteht,
eine untere Spannungsgrenze im Bordnetz ist unterschritten,
eine Feststellbremse ist angezogen.

10. Wiederstartanordnung für ein Kraftfahrzeug (1) mit einem hydraulischen Bremssystem, einem Bremsdrucksensor (14), einem Starter (15) und einem Steuergerät (13), wobei das Steuergerät (13) mit dem Starter (15) und dem Bremsdrucksensor (14) in Kommunikationsverbindung (16; 17) steht und das Steuergerät (13) einen Wiederstartalgorithmus als ablauffähiges Programm enthält, mit dem das Wiederstartverfahren nach einem der vorhergehenden Ansprüche ausführbar ist.

11. Wiederstartanordnung nach Anspruch 10 mit einem Schalter (18) mit dem das Widerstartverfahren wahlweise zu- oder abschaltbar ist.

12. Wiederstartanordnung nach Anspruch 11, wobei der Schalter (18) über einen Gangwählhebel betätigbar ist oder an diesem angeordnet ist.

13. Fahrzeug mit einer Wiederstartanordnung nach einem der Ansprüche 10 bis 12.

## Claims

1. Restart method for automatically starting an internal combustion engine (2) of a motor vehicle (3) by means of a brake pedal actuation, comprising the following steps:
detecting a brake pressure (p) by means of a brake pressure sensor (14),
outputting a corresponding brake pressure signal sequence to a control unit (13),
determining a brake pressure profile (p_{Pr}) from the brake pressure signal sequence,
**characterized in that**
the method additionally comprises the following steps:
ascertaining a reference pressure value (p_{R}) from the brake pressure profile, the reference pressure value (p_{R}) being a brake pressure maximum (p_{Max}) of an ascertained brake pressure profile (p_{Pr}),
detecting a brake release state when, on releasing a brake pedal, based on the ascertained reference pressure value (p_{R}) a brake pressure drop (Δp) is detected which exceeds a pressure drop limit value (Δp_{G}), and
emitting a start signal (Sws) to a starter (15) for starting the combustion engine (2) when the brake release state has been detected.

2. Restart method according to claim 1, wherein the reference pressure value (p_{R}) can be determined depending on a profile portion (I; II; III) of the ascertained brake pressure profile (p_{Pr}).

3. Restart method according to either claim 1 or claim 2, wherein the reference pressure value (p_{R}) can be determined depending on a plurality of stopping cycles within one operating cycle by evaluating a plurality of brake pressure profiles (p_{Pr}).

4. Restart method according to any of claims 1 to 3, wherein the pressure drop limit value (Δp_{G}) can be determined depending on the ascertained reference pressure value (p_{R}) and/or the ascertained brake pressure profile (p_{Pr}).

5. Restart method according to any of claims 1 to 4, wherein the pressure drop limit value (Δp_{G}) can be determined depending on an adjustable shift characteristic of an automatic transmission.

6. Restart method according to any of claims 1 to 5, wherein the pressure drop limit value (Δp_{G}) can be determined depending on the driver type classification of the particular driver.

7. Restart method according to any of the preceding claims, wherein the start signal (Sws) is emitted if at least one of the following conditions is met:
the brake release state has been detected,
the brake pressure falls below a lower threshold value (psu),
when the brake is released, a main brake switch (8) is actuated.

8. Restart method according to any of the preceding claims, wherein the output of the brake pressure signal sequence can be selectively switched on or off.

9. Restart method according to any of the preceding claims, wherein the emission of the start signal (Sws) is prevented if at least one of the following conditions is detected by means of a switch (18) and/or a sensor (19):
a vehicle door, a trunk lid and/or a hood is open,
an accident situation exists,
a lower voltage limit in the vehicle electrical system is not met,
a parking brake is applied.

10. Restart arrangement for a motor vehicle (1) having a hydraulic brake system, a brake pressure sensor (14), a starter (15) and a control unit (13), wherein the control unit (13) is in communication connection (16; 17) with the starter (15) and the brake pressure sensor (14) and the control unit (13) contains a restart algorithm as an executable program with which the restart method according to any of the preceding claims can be carried out.

11. Restart arrangement according to claim 10 having a switch (18) with which the restart method can be selectively switched on or off.

12. Restart arrangement according to claim 11, wherein the switch (18) is actuatable via a gear selector lever or is arranged on said gear selector lever.

13. Vehicle having a restart arrangement according to any of claims 10 to 12.

## Revendications

1. Procédé de redémarrage pour le démarrage automatique d'un moteur à combustion interne (2) d'un véhicule automobile (3) au moyen d'un actionnement de la pédale de frein, comprenant les étapes suivantes :
détection d'une pression de freinage (p) au moyen d'un capteur de pression de freinage (14),
émission d'une séquence de signaux de pression de freinage correspondante vers un appareil de commande (13),
détermination d'un profil de pression de freinage (p_{Pr}) à partir de la séquence de signaux de pression de freinage,
**caractérisé en ce**
**que** le procédé comprend en outre les étapes suivantes :
détermination d'une valeur de pression de référence (p_{R}) à partir du profil de pression de freinage, dans lequel la valeur de pression de référence (p_{R}) est un maximum de pression de freinage (p_{Max}) d'un profil de pression de freinage (p_{Pr}) déterminé,
détection d'un état de desserrage de frein lorsque, lors du desserrage d'une pédale de frein, une chute de pression de freinage (Δp) est détectée, à partir de la valeur de pression de référence (p_{R}) déterminée, qui dépasse une valeur limite de chute de pression (Δpc), et
délivrance d'un signal de démarrage (Sws) à un démarreur (15) pour démarrer le moteur à combustion interne (2) lorsque l'état de desserrage du frein a été détecté.

2. Procédé de redémarrage selon la revendication 1, dans lequel la valeur de pression de référence (p_{R}) peut être déterminée en fonction d'une section de profil (I ; II ; III) du profil de pression de freinage (p_{Pr}) déterminé.

3. Procédé de redémarrage selon la revendication 1 ou 2, dans lequel la valeur de pression de référence (p_{R}) peut être déterminée en fonction de plusieurs cycles d'arrêt à l'intérieur d'un cycle de fonctionnement par évaluation de plusieurs profils de pression de freinage (p_{Pr}).

4. Procédé de redémarrage selon l'une des revendications 1 à 3, dans lequel la valeur limite de chute de pression (Δp_{G}) peut être déterminée en fonction de la valeur de pression de référence (p_{R}) déterminée et/ou du profil de pression de freinage (p_{Pr}) déterminé.

5. Procédé de redémarrage selon l'une des revendications 1 à 4, dans lequel la valeur limite de chute de pression (Δp_{G}) peut être déterminée en fonction d'une caractéristique de changement de vitesse réglable d'une boîte de vitesses automatique.

6. Procédé de redémarrage selon l'une des revendications 1 à 5, dans lequel la valeur limite de chute de pression (Δp_{G}) peut être déterminée en fonction d'une classification de type de conducteur du conducteur respectif.

7. Procédé de redémarrage selon l'une quelconque des revendications précédentes, dans lequel le signal de démarrage (Sws) est délivré lorsqu'au moins une des conditions suivantes est remplie :
l'état de desserrage du frein a été détecté,
la pression de freinage est inférieure à une valeur seuil inférieure (psu),
un commutateur de frein principal (8) est actionné lors du desserrage du frein.

8. Procédé de redémarrage selon l'une des revendications précédentes, dans lequel l'émission de la séquence de signaux de pression de freinage peut être activée ou désactivée au choix.

9. Procédé de redémarrage selon l'une des revendications précédentes, dans lequel l'émission du signal de démarrage (Sws) est interrompue lorsqu'au moins l'un des états suivants est détecté au moyen d'un commutateur (18) et/ou d'un capteur (19) :
une portière de véhicule, un hayon de coffre à bagages et/ou un capot moteur est ouvert,
une situation d'accident est présente,
une limite inférieure de tension dans le réseau de bord n'est pas atteinte,
un frein de stationnement est serré.

10. Agencement de redémarrage pour un véhicule automobile (1) comportant un système de freinage hydraulique, un capteur de pression de freinage (14), un démarreur (15) et un appareil de commande (13), dans lequel l'appareil de commande (13) est en liaison de communication (16 ; 17) avec le démarreur (15) et le capteur de pression de freinage (14) et l'appareil de commande (13) contient un algorithme de redémarrage sous forme de programme exécutable, avec lequel le procédé de redémarrage selon l'une des revendications précédentes peut être exécuté.

11. Agencement de redémarrage selon la revendication 10 comportant un commutateur (18) avec lequel le procédé de redémarrage peut être activé ou désactivé au choix.

12. Agencement de redémarrage selon la revendication 11, dans lequel le commutateur (18) peut être actionné par un levier de sélection de vitesse ou est agencé sur celui-ci.

13. Véhicule comportant un agencement de redémarrage selon l'une des revendications 10 à 12.
